Europäisches Patentamt

European Patent Office

Office européen des brevets

(11) Veröffentlichungsnummer: **0 283 646 B1**

(12)

# EUROPÄISCHE PATENTSCHRIFT

(45) Veröffentlichungstag der Patentschrift: **15.04.92**

(21) Anmeldenummer: **88100666.2**

(22) Anmeldetag: **19.01.88**

(51) Int. Cl.5: **B60K 35/00**, B60K 37/02, H01H 13/14

54 **Bedienungsanordnung für ein Anzeigegerät.**

(30) Priorität: **06.02.87 DE 8701812 U**

(43) Veröffentlichungstag der Anmeldung:
**28.09.88 Patentblatt 88/39**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**DE-A- 3 622 458**
**DE-B- 1 084 593**
**US-A- 4 118 680**

(73) Patentinhaber: **Mannesmann Kienzle GmbH**
**Heinrich-Hertz-Strasse**
**W-7730 Villingen-Schwenningen(DE)**

(72) Erfinder: **Schmid, Mechtilde**
**Görlitzerstrasse 105**
**W-7730 Villingen-Schwenningen(DE)**
Erfinder: **Adams, Jürgen**
**Am Mühlweiher 1**
**W-7730 Villingen-Schwenningen(DE)**
Erfinder: **Becker, Otto**
**Baarweg 14**
**W-7218 Trossingen 2(DE)**

EP 0 283 646 B1

## Beschreibung

Die Erfindung betrifft eine Bedienungsanordnung für ein Anzeigegerät, welches für ein ziffernmäßiges Darstellen unterschiedlicher Betriebsdaten eines Kraftfahrzeuges eingerichtet ist und wenigstens einen Schalter zum fortlaufenden Abfragen der zur Verfügung gestellten Betriebsdaten und einen Schalter zum Löschen beispielsweise einem Fahrtabschnitt zugeordneter Betriebsdaten umfaßt. Eine derartige Bedienungsanordnung ist im Stand der Technik bekannt.

Ein Anzeige bzw. Informationsgerät gemäß dem Gattungsbegriff hat in einem Kraftfahrzeug die Aufgabe, insbesondere solche Betriebsdaten anzuzeigen, welche die klassischen, für Geschwindigkeit, Drehzahl, Tankinhalt oder Kühlwasser-Temperatur vorgesehenen Instrumente nicht oder nicht genügend markant anzeigen. Auf der anderen Seite wäre für jeweils autonome Anzeigegeräte weder der Einbauraum im Sichtbereich des Fahrers gegeben, noch wäre es aus ästhetischen und praktischen Gründen zweckmäßig, die dann entstehende Instrumentenhäufung anzustreben. Im übrigen ist bei manchen Betriebsdaten der Informationseffekt besser, wenn sie nicht kontinuierlich angezeigt werden, sondern bewußt abgefragt werden müssen. Solche Betriebsdaten sind, wenn das Informationsangebot beispielsweise eine wirtschaftliche Fahrweise unterstützen soll, Momentanverbrauch, Durchschnittsverbrauch, Durchschnittsgeschwindigkeit, aber auch Reichweite und Reisezeit.

Damit ein solches Informationsgerät seiner Aufgabe gerecht werden kann, muß es im Sichtbereich des Fahrers angeordnet, und zwar der Akzeptanz wegen im Armaturenbrett eingebaut werden, d. h. es muß dort installiert werden, wo sich ohnehin Fahrzeuginstrumente befinden und Einbauraum knapp ist. Hinzu kommt, daß die Abmessungen eines derartigen Gerätes einer aus designerischen Gründen vorgegebenen Flächenteilung des betreffenden Armaturenbretts entsprechen muß.

Derartige Ausgangsbedingungen erzwingen ein Gerät mit relativ kleinen Abmessungen, was dessen Frontfläche anbelangt. Demgegenüber erfordert eine übersichtliche, sozusagen auf einen Blick erkennbare Anzeige, die die Aufmerksamkeit des Fahrers möglichst wenig vom Verkehrsgeschehen ablenkt, ein möglichst großes Anzeigefeld.

Diese entgegenstehenden Forderungen lassen hinsichtlich der der Frontfläche des Anzeigegerätes zuzuordnenden Bedienungselemente, von denen gemäß dem bekannten Stand der Technik wenigstens zwei erforderlich sind, sehr wenig Raum, so daß die Ausbildung beispielsweise mehrerer Bedientasten nur möglich ist, wenn die Tasten eng beieinanderliegend und mit relativ kleiner Tastenfläche ausgebildet werden.

Eine solche Ausbildung der Bedienungsmittel ist aber wenig benutzerfreundlich, insbesondere da die Bedienung in der Regel während der Fahrt und im allgemeinen ohne bewußte Beobachtung der Bedienungsmittel erfolgt.

Aufgabe der vorliegenden Erfindung war es daher, für ein Anzeigegerät der eingangs genannten Gattung eine Bedienungsanordnung zu schaffen, welche sowohl den geringen Abmessungen eines derartigen Gerätes, als auch dessen Benutzungssituation in einem Kraftfahrzeug angepaßt ist.

Die Lösung der Aufgabe sieht vor, daß zur Betätigung der Schalter eine einzige Taste mit im wesentlichen rechteckförmigem Querschnitt vorgesehen ist, daß eine Dimension der Taste gleich oder größer ist als die kleinere Dimension eines rechteckförmigen Anzeigefensters des Anzeigegerätes und daß die Taste im Gehäuse des Anzeigegerätes in Richtung ihrer Längsachse wippfähig angeordnet und in einem Ausschnitt in der Frontwand des Gehäuses des Anzeigegerätes geführt ist.

Weitere vorteilhafte Ausbildungen und Maßnahmen beschreiben die Unteransprüche.

Der entscheidende Vorteil der gefundenen Lösung ist darin zu sehen, daß mit der einen Taste eine größtmögliche Nutzung des gegebenen Gehäuserahmens erzielbar ist und in der erfindungsgemäßen Ausbildung ein Funktionsumfang von drei Tasten mit erheblich geringerem Bauteileaufwand realisiert werden kann. Außerdem stellt die eine Taste in der neuerungsgemäßen "formatfüllenden" Ausbildung ein Bedienungselement dar, welches der Situation im Kraftfahrzeug, insbesondere in einem LKW oder in einer Baumaschine, in besonderer Weise gerecht wird, da es griffgünstig und blind, beispielsweise auch mit dem Daumen bedienbar ist. Auch sind durch die gewählte, großräumige Taste günstige Voraussetzungen für ein unauffälliges, verdecktes Anbringen einer Öffnung zur Eichung des Gerätes und/oder zum Lösen einer Gehäuseverriegelung, und zwar im eingebauten Zustand, und zur ordnungsgemäßen und noch einigermaßen handhabbaren Plombierung dieser Öffnung geschaffen. Dabei ist die Plombe bei der gewählten Lösung noch im Sichtbereich des Fahrers und kann jederzeit auf Beschädigung überprüft werden. Bei der normalen Betätigung der Taste stört sie jedoch nicht; sie übt auch bei auffallender Farbgebung an der Stelle, wo sie angebracht ist, keine falsche Signalwirkung aus.

Im folgenden sei die Erfindung anhand der beigefügten Zeichnungen näher erläutert.

Es zeigen

FIGUR 1 ein Einbaubeispiel des betreffenden Anzeigegerätes im Armaturenbrett eines Kraftfahrzeuges,

FIGUR 2 eine Frontansicht des Anzeigegerätes,

FIGUR 3 eine teilweise geschnittene Seitenansicht des Anzeigegerätes,

FIGUR 4 ein Schnittbild gemäß der Schnittlinie A-B in FIGUR 2,

FIGUR 5 eine Schemaskizze zur Darstellung des Funktionsumfanges der erfindungsgemäßen Bedienungsanordnung.

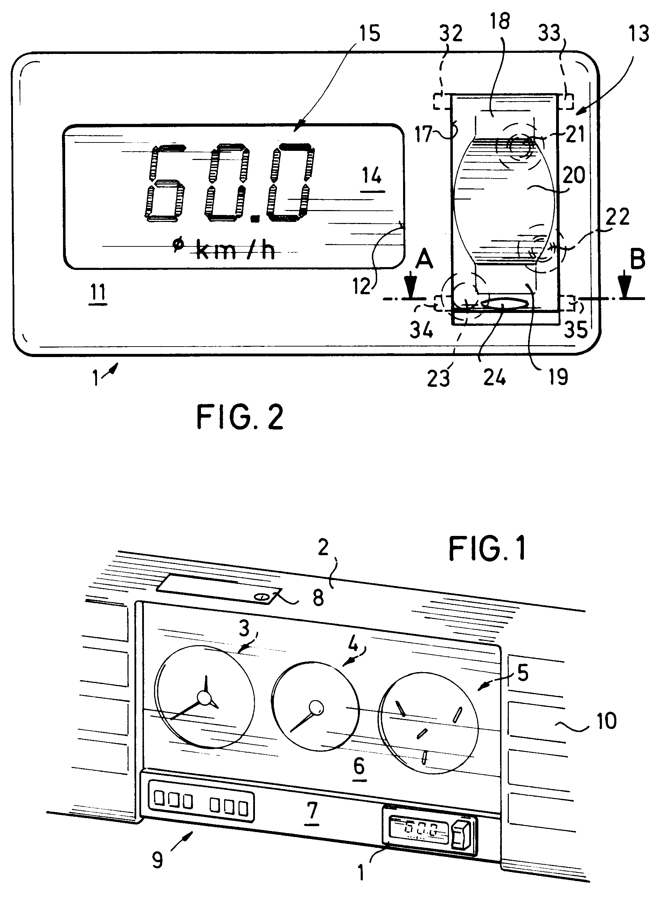

Gemäß FIGUR 1 ist das Anzeigegerät 1 in dem dargestellten Armaturenbrett 2, den üblichen Instrumenten 3, 4 und 5, deren Anzeigeelemente hinter einer gemeinsamen Glasscheibe 6 sichtbar sind, zugeordnet und in einem geeigneten Ausschnitt einer Blende 7 eingebaut. Mit 8 ist eine verschließbare Klappe bezeichnet, die die Diagrammscheibenschächte eines Fahrtschreibers abdeckt. Die Tasten 9 dienen in bekannter Weise der Steuerung der Arbeitszeitschreiber des Fahrtschreibers entsprechend der jeweiligen Arbeitsart der Fahrer. Mit 10 sind Leerfelder des Armaturenbretts, Schalter oder Signalelemente bezeichnet.

Die Frontansicht des Anzeigegerätes 1 zeigt eine im Verhältnis zu dem aus der Frontwand 11 des Gehäuses des Anzeigegerätes 1 ausgesparten Anzeigefensters 12 relativ große, rechteckförmige Taste 13, d. h. eine Taste, deren eine frontseitige Dimension größer ist als die kleinere Dimension des Anzeigefensters 12, hinter dessen im Gehäuse eingesetzter Glasscheibe 14 beispielsweise eine LCD-anzeigeeinrichtung 15 auf einer in geeigneter Weise angeordneten Leiterplatte 16 angeordnet ist.

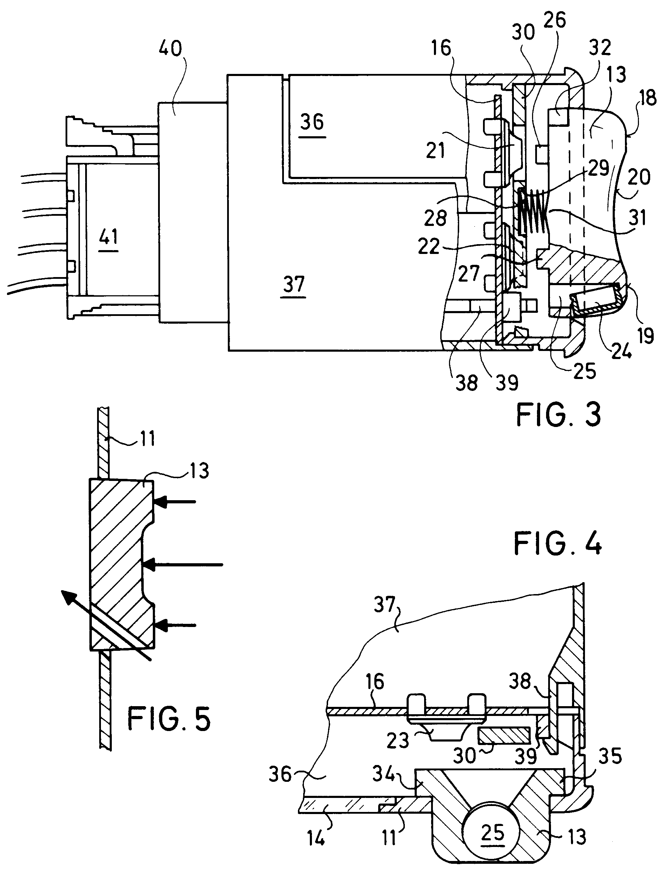

Die Taste 13 greift durch eine geeignete Aussparung 17 in der Frontfläche 11 hindurch und ist durch frontseitige Erhebungen 18 und 19 sowie eine Mulde 2o gekennzeichnet. Ferner zeigt FIGUR 2 der Taste 13 zugeordnete Schalter 21, 22 und 23, die an der Leiterplatte 16 befestigt sind. Dabei wird der Schalter 21 betätigt, wenn die Taste 13 im Bereich der Erhebung 18 und der Schalter 22, wenn die Taste 13 im Bereich der Erhebung 19 niedergedrückt werden. Eine weitere Funktion ist, wie die Betätigungspfeile in der Schemaskizze FIGUR 5 zeigen, realisierbar, wenn die Taste 13 in der Mulde 2o niedergedrückt wird. Der Schalter 23, der Justier- und Eichzwecken dient, ist demgegenüber durch eine an der nicht näher bezeichneten Seitenwand der Taste 13 zugänglichen und mit einer Plombe 24 gesicherten Öffnung 25 bedienbar. Zu diesem Zweck ist in der Öffnung 25, die, wie FIGUR 4 zeigt, nach innen aufgeweitet ist, ein geeigneter Sitz für die Plombe 24 ausgeformt.

Die Betätigung der Schalter 21 und 22 erfolgt mittels an der Taste 13, die, wie FIGUR 3 zeigt, in der Aussparung 17 in der Frontwand 11 geführt ist, ausgebildeter Schäfte 26 und 27. Der Taste 13 ist eine Druckfeder 28 zugeordnet, welche einerseits in einer zylindrischen Senkung 29 eines Steges 3o gefaßt ist und sich andererseits an einer an der Taste 13 ausgebildeten, sozusagen eine gleitfähige Zweipunktauflage für die Feder 28 bildende Schneide 31 abstützt. An an gegenüberliegenden Seitenwänden der Taste 13 angeformten Vorsprüngen 32 bis 35 - es sind auch durchgehende Leisten denkbar - die bzw. deren senkrecht zur jeweiligen Seitenwand stehende Kanten beim Betätigen der Taste 13 im Bereich der einen oder anderen Erhebung 18 oder 19 als Drehachse dienen, stützt sich die Taste 13 unter der Wirkung der Druckfeder 28 an der Innenseite der Frontwand 11 ab.

Die FIGUR 3 zeigt ferner, daß das Gehäuse des Anzeigegerätes 1 aus zwei Gehäuseteilen 36 und 37 besteht, die in geeigneter Weise zusammengefügt sind und die beim Zusammenfügen die Leiterplatte 16 haltern. Ein am Gehäuseteil 37 angeformter Riegel 38 verrastet beim Zusammenfügen der beiden Gehäuseteile 36 und 37 mit einer am Gehäuseteil 36 ausgebildeten Öse 39 und dient sozusagen als Plombierung der beiden Gehäuseteile. Der Riegel 38 ist lösbar und somit die Gehäuseteile 36 und 37 beschädigungsfrei trennbar, wenn die in der Taste 13 befindliche Plombe 24 gelöst und der Riegel 38 durch die Öffnung 25 hindurch betätigt wird.

Der Vollständigkeit halber sei noch erwähnt, daß die Taste 13 in geeigneter Weise beleuchtet sein muß und an dem Gehäuseteil 37 Aufnahmemittel für weitere Leiterplatten bzw. flexible Schaltungsträger ausgebildet sind, die untereinander und mit der Leiterplatte 16 elektrisch verbunden sind, daß Steckerfassungen 4o angeformt sind und daß der Steg 3o im Gehäuseteil 36 lediglich durch geeignete Spannwirkung befestigt ist. Mit 41 ist einer von mehreren angeschlossenen Steckern bezeichnet. Die Leiterplatten dienen unter anderem als Träger für die elektronischen Ansteuermittel der LCD-Anzeigeeinrichtung 15 sowie für erforderliche Speicher- und gegebenenfalls Rechenschaltungen zur Weiterverarbeitung der ausgewählten, entweder von im Fahrzeug installierten Gebern unmittelbar gelieferten oder bereits aufbereiteten, von den Fahrzeuginstrumenten gelieferten Meßwerten.

Die Wählbarkeit der Betriebsdaten kann, um eine bessere Marktanpassung des Gerätes zu erzielen, derart organisiert sein, daß die Betriebsdaten mit mehreren für ein und dieselbe Meßgröße üblichen Grundmaßeinheiten ermittelt bzw. berechnet werden. Mit dem Betätigen der einen Seite der Taste 13 sind dann beispielsweise gallon- und milesbezogene, mit dem Betätigen der anderen Seite liter- und kilometerbezogene Betriebsdaten abfragbar. Zum Drücken der Taste 13 in der Mulde 2o wird eine Löschfunktion ausgelöst, und zwar für solche Betriebsdaten, die tourenbezogen sind, z. B. Durchschnittsverbrauch, Reisezeit und Durchschnittsgeschwindigkeit.

**Patentansprüche**

1. Bedienungsanordnung für ein Anzeigegerät, welches für ein ziffernmäßiges Darstellen unterschiedlicher Betriebsdaten eines Kraftfahrzeuges eingerichtet ist und wenigstens einen Schalter zum fortlaufenden Abfragen der zur Verfügung gestellten Betriebsdaten und einen Schalter zum Löschen beispielsweise einem Fahrtabschnitt zugeordneter Betriebsdaten umfaßt,
dadurch gekennzeichnet,
daß zur Betätigung der Schalter (21, 22) eine einzige Taste (13) mit im wesentlichen rechteckförmigem Querschnitt vorgesehen ist,
daß eine Dimension der Taste (13) gleich oder größer ist als die kleinere Dimension eines rechteckförmigen Anzeigefensters (12) des Anzeigegerätes (1) und
daß die Taste (13) im Gehäuse des Anzeigegerätes (1) in Richtung ihrer Längsachse wippfähig angeordnet und in einem Ausschnitt (17) in der Frontwand (11) des Gehäuses des Anzeigegerätes (1) geführt ist.

2. Bedienungsanordnung nach Anspruch 1,
dadurch gekennzeichnet,
daß an der Rückseite der Taste (13) zwei den Schaltern (21, 22) zugeordnete Schäfte (26, 27) ausgebildet sind und
daß an gegenüberliegenden Seitenwänden der Taste (13) in ein und derselben Ebene liegende, als Drehachsen dienende Vorsprünge (32, 33 und 34, 35) angeformt sind.

3. Bedienungsanordnung nach Anspruch 1,
dadurch gekennzeichnet,
daß zwischen einem im Gehäuse befestigten Steg (30) und der Taste (13) eine Druckfeder (28) angeordnet ist, welche zwischen den Drehachsen an der Rückseite der Taste (13) anliegt.

4. Bedienungsanordnung nach Anspruch 3,
dadurch gekennzeichnet,
daß an der Taste (13) eine Schneide (31) ausgebildet ist und
daß die Druckfeder (28) stirnseitig an der Schneide (31) anliegt.

5. Bedienungsanordnung nach Anspruch 1,
dadurch gekennzeichnet,
daß in einer Seitenwand der Taste (13) eine Öffnung (25) vorgesehen ist,
daß durch die Öffnung (25) ein dritter Schalter (23) und/oder eine Gehäuseverriegelung (38, 39) betätigbar sind und
daß die Öffnung (25) derart ausgebildet ist, daß sie mittels einer Plombe (24) verschließbar ist.

## Claims

1. Operating arrangement for a display unit which is set up for numeric display of various operating data of a motor vehicle and which includes at least one switch for continuous interrogation of the operating data made available and one switch for deleting, for example, operating data allocated to a journey section, characterized in that to actuate the switches (21, 22) a single key (13) having substantially rectangular cross-section is provided, in that a dimension of the key (13) is equal to or larger than the smaller dimension of a rectangular display window (12) of the display unit (1), and in that the key (13) is arranged in the housing of the display unit (1) capable of rocking in the direction of its longitudinal axis and is guided in a cutout (17) in the front wall (11) of the housing of the display unit (1).

2. Operating arrangement according to Claim 1, characterized in that there are constructed on the rear side of the key (13) two shafts (26, 27) associated with the switches (21, 22), and in that projections (32, 33 and 34, 35) are integrally formed on opposite side walls of the key (13), lying in one and the same plane and serving as axes of rotation.

3. Operating arrangement according to Claim 1, characterized in that there is arranged between a web (30) secured in the housing and the key (13) a pressure spring (28) which bears against the rear side of the key (13) between the axes of rotation.

4. Operating arrangement according to Claim 3, characterized in that a blade (31) is constructed on the key (13), and in that the pressure spring (28) bears on the end side against the blade (31).

5. Operating arrangement according to Claim 1, characterized in that an opening (25) is provided in a side wall of the key (13), in that a third switch (23) and/or a housing lock (38, 39) are actuable through the opening (25), and that the opening (25) is constructed such that it is closable by means of a lead seal (24).

## Revendications

1. Dispositif de manipulation pour un appareil d'affichage qui est arrangé pour une représentation numérique de différentes données d'exploitation d'un véhicule automobile et qui englobe au moins un commutateur pour l'interrogation continue des données d'exploitation fournies et un commutateur pour l'effacement de données d'exploitation affectées, par exemple, à un segment de trajet,
caractérisé par le fait
qu'une seule touche (13) d'une section pour l'essentiel rectangulaire est prévue pour l'actionnement des commutateurs (21, 22),
qu'une dimension de la touche (13) est égale ou supérieure à la plus petite dimension d'une fenêtre d'affichage (12) de forme rectangulaire de l'appareil d'affichage (1) et
que la touche (13) est disposée de façon à pouvoir basculer dans le sens de son axe longitudinal dans le boîtier de l'appareil d'affichage (1) et est guidée dans un évidement (17) pratiqué dans le panneau frontal (11) du boîtier de l'appareil d'affichage (1).

2. Dispositif de manipulation selon la revendication 1,
caractérisé par le fait
que deux ergots (26, 27) associés aux commutateurs (21, 22) sont formés sur la face arrière de la touche (13) et
que des saillies (32, 33 et 34, 35) situées dans un seul et même plan et servant d'axe de rotation sont moulées sur des faces latérales opposées de la touche (13).

3. Dispositif de manipulation selon la revendication 1,
caractérisé par le fait
qu'un ressort de pression (28), qui appuie entre les axes de rotation sur la face arrière de la touche (13), est disposé entre une traverse (30) fixée dans le boîtier et la touche (13).

4. Dispositif de manipulation selon la revendication 3,
caractérisé par le fait
qu'un couteau (31) est formé sur la touche (13) et
que le ressort de pression (28) appuie du côté frontal sur ledit couteau (31).

5. Dispositf de manipulation selon la revendication 1,
caractérisé par le fait
qu'une ouverture (25) est prévue dans une paroi latérale de la touche (13),
que, à travers l'ouverture (25), un troisième commutateur (23) et/ou un verrouillage de boîtier (38, 39) peut être actionné et
que l'ouverture (25) a une configuration telle qu'elle peut être fermée par un plomb (24).

FIG. 2

FIG. 1

**FIG. 3**

**FIG. 4**

**FIG. 5**

7